# EUROPEAN PATENT APPLICATION

(11) **EP 4 312 094 A1**
(43) Date of publication of application: **31.01.2024**
(21) Application number: 22187090.0
(22) Date of filing: 26.07.2022
(51) Int. Cl.: G05B 19/042

(54) **CONNECTING SYSTEM COMPRISING A DEVICE CONFIGURATION FOR AN ARTIFICIAL NEURAL NETWORK**

(71) Applicant: Gish, Charles, 74080 Heilbronn (DE)
(72) Inventor: Gish, Charles, 74080 Heilbronn (DE)
(74) Representative: Wimmer, Stephan

(57) **Abstract**

Proposed is a connecting system with a connection and configuration of a device between an industrial control system (ICS) and each sensor and actuator in a plant or a machine,
in which loT devices are connected between the ICS and each sensor and actuater, at the physical locations of each sensor and actuator in the plant or machine.

## Description

The invention relates to a connecting system for a device configuration comprising at least one Internet of Things (loT) device for an artificial neural network.

### Prior art

Over the past several decades, rapid advances in semiconductors, automation, and control systems have resulted in the adoption of programmable logic controllers (PLCs) in an immense variety of process automation environments. Individual and interconnected PLCs are deployed in a wide range of industrial applications and carry out a variety of tasks, but they also need to be replaced as they age. Improvements in replacing legacy PLCs will enhance the ability of automation environments to continue running correctly and with reduced downtime.

In many cases, PLCs are designed for high reliability in challenging industrial environments and have very long lifetimes. These advantages, however, create technical problems when working with legacy PLCs. As examples, the technical problems include the lack of spare parts, unavailability of proprietary programming terminals, missing programming documentation, and the gradual loss of the engineering skills needed to program, install, troubleshoot and verify the operation of the legacy PLCs.

The european patent application EP 3 729 214 A1 "Method and Device for Replacing Legacy programmable logic controllers" is used for replacing a legacy PLC with another PLC by having the new PLC learn the legacy PLC's behavior. The proposed invention may be used for replacing existing PLCs, and may also be left in place and used as a fallback system in case of a failure of the existing PLC. Also, the proposed invention is designed so that if the loT devices in the new smart system fail, the existing PLC or industrial control system (ICS) will resume control of the machine or plant through bypass switches. Thus, the proposed invention has the advantage of making legacy systems more redundant and fail-safe.

The method described in the patent describes the replacement of legacy equipment. The proposed invention has this capability, and also includes an upgrade to smart factory or Industry 4.0 capabilities. The method described in the patent uses a single PLC with limited I/O and processing resources. The proposed invention is scalable. If more sensors or actuators are added to the machine or plant, another loT device is connected with the new equipment and the learning process is continued with the newly integrated part. With the addition of the new part and loT device in the system, more processing power for the system is added in the form of the processor in the loT device.

The method described in the patent describes wiring the new PLC in parallel with the legacy PLC, which requires extra wiring to be installed for the signal I/O of the new PLC. The proposed invention has the advantage that no additional wiring infrastructure is necessary, because the loT devices are integrated in series with the existing ICS, installed at the physical locations of each sensor and actuator in the machine or plant.

Many industrial sector companies, are using outdated equipment in their manufacturing and processing facilities. With the introduction of Industry 4.0, traditional industrial control systems and their associated field devices are increasingly being phased out in favor of loT solutions. Replacing the sensors, actuators, and controllers in modern production environments is costly and time consuming. The Internet of Things (loT) generally refers to a system of devices capable of communicating over a network.

### Disclosure of the invention

The invention is disclosed by the features of the main claim. Embodiments and further embodiments are the subject of the further claims following the main claim.

The invention concerns a connecting system for a device configuration comprising at least one loT device for an artificial neural network, and solves the problem mentioned by providing a low-cost, integrated architecture for retrofitting existing machines or plants to be Industry 4.0 capable. In particular, the invention presents a distributed neural Internet of Things (loT) edge architecture for smart retrofitting of existing industrial systems.

This is accomplished through a network of distributed loT devices, that serve as digital interfaces to existing sensors and actuators, and simultaneously as neural node collections in a distributed artificial neural network. The proposed invention also serves to add redundancy to failure-prone industrial control systems or PLCs by cloning control system behavior and assuming control of the machine or plant when the control system fails or is removed for maintenance. It follows that the loT device network may be used as a permanent replacement of the control system as well.

A plurality of the loT devices are connected between the industrial control system (ICS) and each sensor and actuator in the plant, at the physical locations of each sensor and actuator. Once put into place and connected, the loT devices configure themselves into a wireless mesh network, and assemble an artificial neural network (ANN) made up of nodes distributed in varying ways across the loT devices. The ANN then begins learning the I/O state space of the plant. Both the configuration and the learning process are initiated without human intervention, and the devices optimize the artificial neural network autonomously. However, it is possible for a user to connect to the wireless loT device network on a mobile device or laptop to configure the system or to connect it to a cloud platform.

The retrofitted plant may then be integrated into smart factory or Industry 4.0 applications by persons skilled in the art, including creation of administration shells, digital twins, and business application views of all plant assets or components connected to the mesh network of loT devices. Different industrial communication standards may then be used, such as OPC UA, to communicate with other Industry 4.0 equipment. Different protocols may be used as well, including MQTT, HTTP, and CoAP.

Once the entire state space of the plant has been learned by the ANN, the entire machine or plant has a failsafe aspect to its operation. If the ICS fails, the distributed ANN will take over operation of the machine or plant. Conversely, if the distributed loT devices fail partially, or as a whole, the ICS is able to function as usual, due to a bypass function of the loT devices. The user could also disconnect the ICS and remove it completely if necessary, using the distributed loT device system as a permanent replacement for the ICS.

The proposed invention has the following advantages over other smart retrofitting solutions:
- The proposed invention allows persons with no engineering experience to upgrade existing equipment to include loT and smart factory capabilities. The persons retrofitting the equipment also require no familiarity with the functionality of the existing system.
- It is control system agnostic, and can be used with any ICS having industry-common digital and analog outputs.
- The artificial neural network, having essentially cloned the ICS functionality, may be replicated and used as ICS integration in sufficiently similar plants within the organization or elsewhere.
- Heterogeneity is possible, in that each loT device can have a unique computing architecture or internal design. This is because each loT device communicates over a common wireless protocol.

Further advantages and advantageous embodiments of the invention can be taken from the following figure description, the drawings and the claims.

In the following, an embodiment example of the solution according to the invention is explained in more detail on the basis of the attached schematic drawings. It shows:
Fig. 1 shows the connecting parts,
Fig. 2 shows the components of the loT device,
Fig. 3 shows an mesh network and an artificial neural network and
Fig. 4 shows a device configuration, an ANN configuration and a state space.

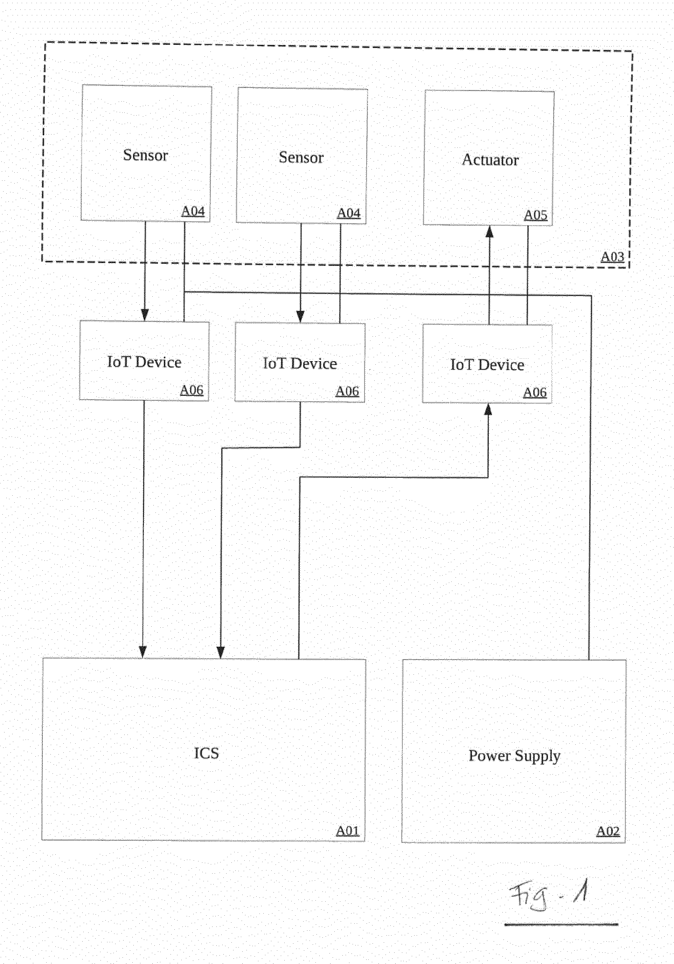

In Fig. 1 are shown the connected parts in the proposed invention, that consist of one or more of the following:
- ICS or PLC (A01)
- Power supply (A02)
- Machine or plant (A03)
- Sensor in the machine or plant (A04)
- Actuator in the machine or plant (A05)
- loT device as described in the proposed invention (A06)

The loT devices are each positioned such that the loT device is connected in series with the sensor or actuator on the signal line, and in parallel with the sensor or actuator on the power source line. Each sensor's output line connects to an loT device's input terminals, and each of these loT device's output terminals connects to an input port of the ICS. The actuator output ports of the ICS each connect to an loT device's input terminals, and each of these loT device's output terminals connect to an actuator.

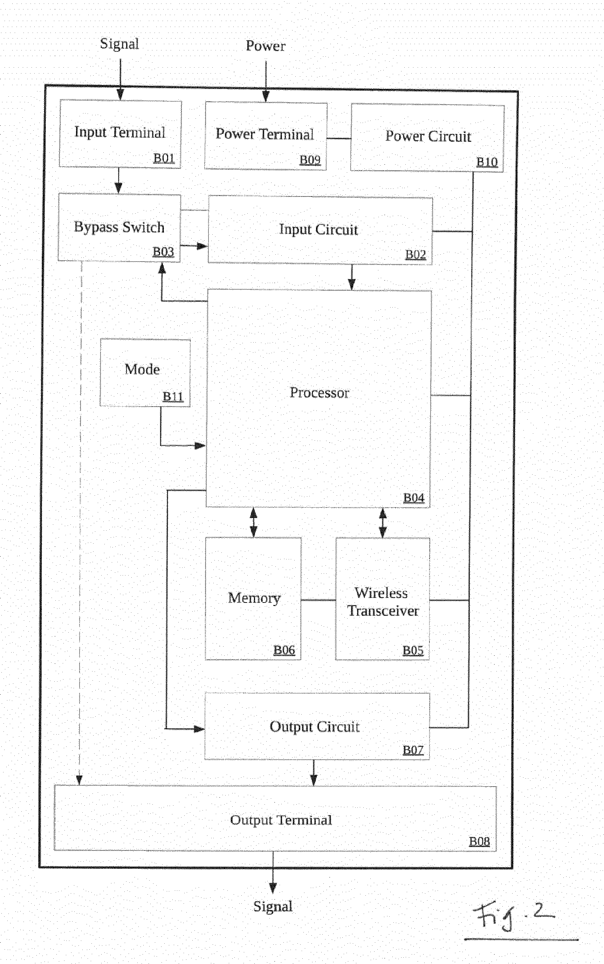

Fig. 2 shows the loT device in the proposed invention, that consists of the following:
- An input terminal (B01)
- An input circuit capable of signal detection and conversion (B02)
- A bypass switch (B03)
- A microprocessor, FPGA, or other processing device (B04)
- A wireless transceiver circuit (B05)
- A non-volatile memory device, such as an EEPROM (B06)
- An output circuit capable of generating an output signal (B07)
- An output terminal (B08)
- A power terminal (B09)
- A power circuit capable of voltage step down and voltage regulation (B10)
- A switch on the device exterior, allowing a selection between sensor and actuator modes of operation (B11)

All circuits and components requiring power are connected to the power circuit by a power bus. Some or all of the circuitry may be included in a single chip (SoC), or the device may contain discrete circuits to accomplish the purposes described. A bypass switch is provided to allow the legacy industrial control system to operate as it would with no loT device connected. This bypass switch will engage when the loT device is powered off, or if manually configured to engage through a user interface application.

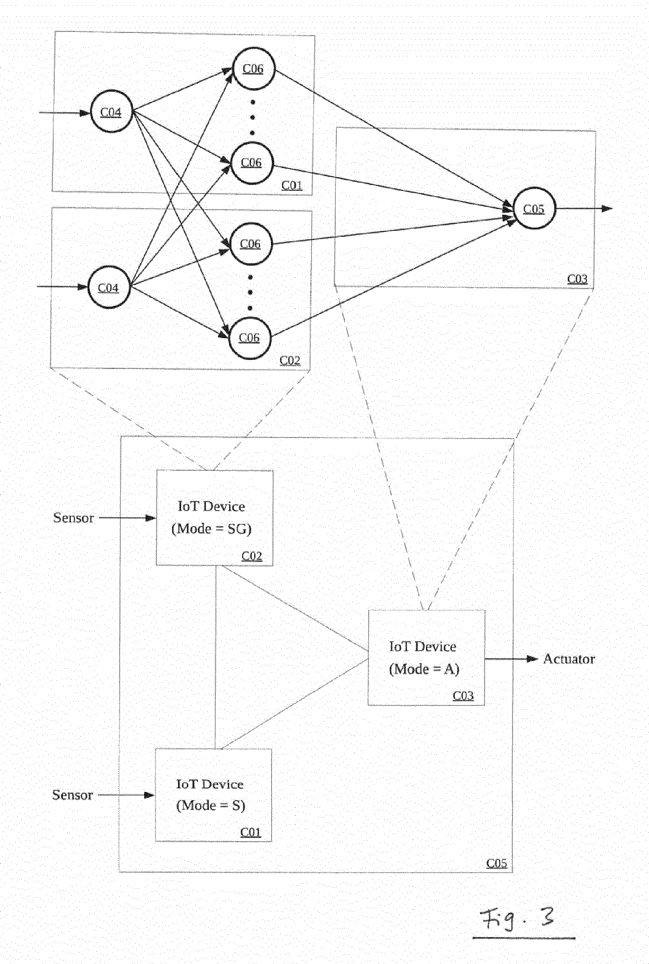

Fig. 3 shows a mesh network, in particular a fully connected, wireless mesh network (C05) made up one or more of the following nodes:
- loT device, in sensor mode of operation (C01)
- loT device, in sensor and gateway mode of operation (C02)
- loT device, in actuator mode of operation (C03)

The network is a fully connected mesh topology, using a common routing protocol, such as AODV or DSR. The nodes in the network may use the IEEE 802.11 WiFi protocol, or other wireless protocols. Only one loT device in the wireless network operates as the gateway, and only a device operating in sensor mode may act as the gateway. In addition to operating in the sensor mode, this gateway device is responsible for: assembling the artificial neural network, monitoring the I/O state space of the ICS, supervising the training of the ANN, and handling outside facing connections. The outside facing connections may connect the mesh network to a cloud platform, another local network, laptop, PC, or mobile device.

Shown is also the artificial neural Network ANN. The ANN consists of one or more of the following:
- Input node and sensor input signal (C04)
- Hidden node: For each hidden node, there is a weight value associated with each input to the node, as well as summing and activation functions to calculate the hidden node's output. (C06)
- Output node: There is a weight value associated with each input to the node, as well as a summing function, and possibly an activation function, to calculate the node's output. (C05)

The ANN is a single-layer feed-forward neural network (SLFN). It is trained using supervised learning, but may emulate unsupervised learning through fast training algorithms. The gateway mode loT device assembles the nodes in the neural network according to a specific order determined by the gateway mode loT device. The number of hidden nodes is a fixed size, and the hidden nodes may be pruned at the optimization stage of training.

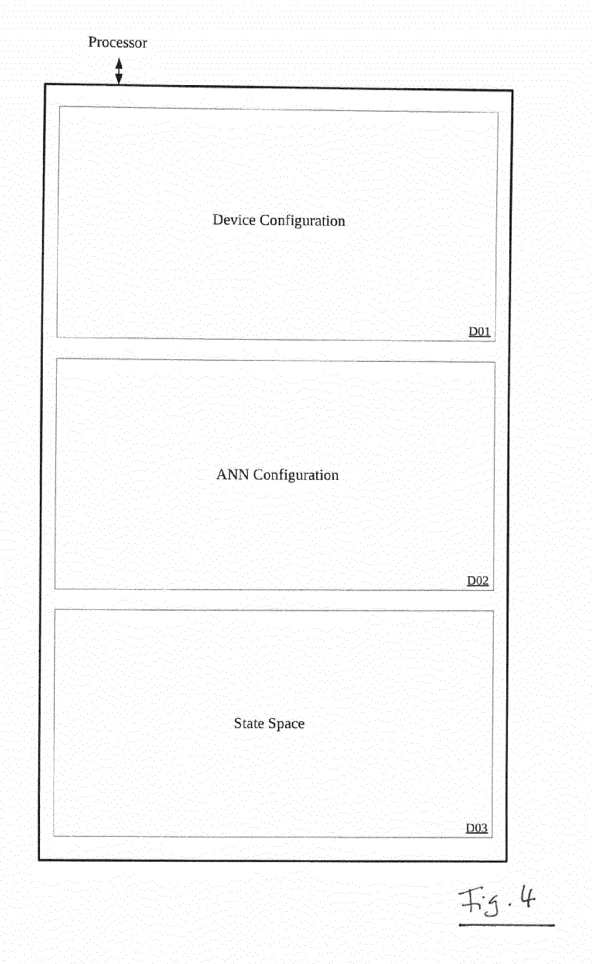

Fig. 4 shows a device configuration D01, an ANN configuration D02 and a state space D03.

The operation is: the gateway mode loT device initiates the input sampling by broadcasting to all sensor mode loT devices a GET message. Each sensor mode loT device, to include the gateway mode loT device, requests the input signal values from all other sensor mode loT devices, storing it into an input matrix. Each sensor mode loT device, calculates the scalar product of the input matrix and its own hidden layer weight matrix, resulting in a scalar value matrix. An activation function is mapped to each element of the scalar product matrix, and the resulting output matrix for the sensor mode loT device is stored, and a READY flag is set locally.

Each actuator mode loT device requests the output matrices of all sensor mode loT devices after checking the READY states of each sensor mode loT device, combining the individual output matrices into a single hidden layer output matrix. Each actuator mode loT device calculates the scalar product of the hidden layer output matrix and its own output layer weight matrix, resulting in a scalar value. The scalar value may or may not be further processed by an activation function. The scalar value is then stored, and a READY flag is set locally.

The gateway mode loT device requests the output values of all actuator mode loT devices after checking the READY states of each actuator mode loT device, combining them into a single output matrix. After checking for anomalies in the output values, the gateway mode loT device broadcasts a SET message to all actuator mode loT devices. Finally, each actuator mode loT device, upon receiving the SET message, sets its signal output to its locally stored scalar output value.

The training is as follows: the gateway mode loT device collects sensor input states from all sensor mode loT devices, and actuator output states from all actuator mode loT devices. It stores these values locally as a matrix with input states mapped to output states, referred to here as the state space. The weight matrix of the hidden layer is composed by appending each weight matrix of each sensor mode loT device to a designated hidden layer weight matrix maintained by the gateway mode loT device. The weight matrix of the output layer is composed by appending each weight matrix of each actuator mode loT device to a designated output layer weight matrix maintained by the gateway mode loT device. The weight matrices in the ANN may be initialized to random values before training is initiated.

After a predetermined time interval or other completion indicator, the gateway mode loT device carries out an adjustment of all or some weights in the ANN according to either a back-propagation algorithm, or an extreme learning machine (ELM) algorithm. This is accomplished using the previously stored matrices of inputs mapped to their corresponding outputs. The ANN is optimized by adjusting hyperparameters, such as the number of hidden layer neurons. After the ANN training error has decreased to a minimum level, the ANN is considered trained.

The memory consist of at least these sections:
- Device configuration, such as default values, mode of operation, and gateway settings (D01)
- ANN configuration, such as local weight matrices, ANN sequence number, and number of hidden nodes (D02)
- State space truth table (D03)

The memory holds all information needed when the loT device powers up, and is available to store any information that needs to be persistent across restarts. It is ideally an Electrically Erasable Programmable Read-Only Memory (EEPROM) that can be accessed and modified by the processing device. The information stored in the memory of each loT device in the system is an example of information redundancy in the fail-safe nature of the proposed invention

All features shown in the description, the following claims and the drawings may be essential to the invention either individually or in any combination with one another.

## Claims

1. Connecting system with a device configuration between an industrial control system ICS and each sensor and actuator in a plant or a machine,
**characterized in that**
loT devices are connected between the ICS and each sensor and actuator, at the physical locations of each sensor and actuator in the plant or machine.

2. Connecting system according to claim 1, **characterized in that** the loT devices put into place and connected, are configured by themselves into a wireless mesh network and are assembled into an artificial neural network ANN.

3. Connecting system according to one of claims 1 or 2, **characterized in that** the artificial neural network ANN is made up of nodes distributed in varying ways across the loT devices and the learning of ANN then begins in the I/O state space of the plant or machine.

4. Connecting system according to any of the preceding claims, **characterized in that** once the entire state space of the plant or machine has been learned by the ANN, the entire plant or machine has a fail-safe aspect to its operation and, if the ICS fails, the distributed ANN is able to take over operation of the plant or machine.

5. Connecting system according to one of the claims 1 to 3, **characterized in that** if the distributed loT devices fail partially or as a whole, the ICS comprises an indication of a bypass function of the loT devices and is able to function as usual.

6. Connecting system according to any of the preceding claims, **characterized in that** the loT device consists oft he following:
- An input terminal (B01)
- An input circuit capable of signal detection and conversion (B02)
- A bypass switch (B03)
- A microprocessor, FPGA, or other processing device (B04)
- A wireless transceiver circuit (B05)
- A non-volatile memory device as an EEPROM (B06)
- An output circuit capable of generating an output signal (B07)
- An output terminal (B08)
- A power terminal (B09)
- A power circuit capable of voltage step down and voltage regulation (B10)
- A switch on the device exterior, allowing a selection between sensor and actuator modes of operation (B11)

7. Connecting system according to any of the preceding claims, **characterized in that** the loT devices are each positioned such that the loT device is connected in series with the sensor or acutator on a signal line and in parallel with the sensor or acutator on a power source line.

8. Connecting system according to claim 7, **characterized in that** each sensor's output line connects to an loT device's input terminals, and each of these loT device's output terminals connects to an input port of the ICS, wherein acutator output ports of the ICS each connect to an loT device's input terminals, and each of these loT device's output terminals connect to an acuator.

9. Connecting system according to any of the preceding claims, **characterized in that** all circuits and components requiring power are connected to the power circuit by a power bus.

10. Connecting system according to one of the claims 1 to 9, **characterized in that** the artificial neural network is a single-layer feed-forward neural network SLFN and is trained by supervised learning and the gateway mode loT device assembles the nodes in the neural network according to a specific order determined by the gateway mode loT device, whereas the number of hidden nodes is a fixed size.

11. Connecting system according to any of the preceding claims, **characterized in that** a memory consists of at least these sections:
- Device configuration as default values, mode of operation, and gateway settings (D01)
- ANN configuration as local weight matrices, ANN sequence number, and number of hidden nodes (D02)
- State space truth table (D03)

12. Connecting system according to claim 11, **characterized in that** the memory holds all information needed when the loT device powers up and is available to store any information that needs to be persistent across restarts.

13. Connecting system according to any of the preceding claims, **characterized in that** the plant or machine retrofitted is integrated into smart factory or Industry 4.0 applications including creation of administration shells, digital twins, business application views of all plant assets or components connected to the mesh network of loT devices.

14. Connecting system according to any of the preceding claims, **characterized in that** there different industrial communication as OPC UA to communicate with other Industry 4.0 equipment are used and/or different protocols including MQTT, HTTP and CoAP are used.

15. Method for the operation of the connecting system according to any of the preceding claims 1 to 14, with the following steps:
a) Initiating an input sampling by the gateway mode loT device by broadcasting a GET message to all sensor mode loT devices
b) Requesting an input signal value of each sensor mode loT device to include the gateway mode loT device from all other sensor mode loT devices, storing it into an input matrix
c) Calculation by each sensor mode loT device of the scalar product of the input matrix and its own hidden layer weight matrix, resulting in a scalar value matrix
d) Mapping an activation function to each element of the scalar product matrix and the resulting output matrix for the sensor mode loT device is stored and a READY flag is set locally
e) Requesting the output matrices of all sensor mode loT devices of each acutator mode loT device after checking the READY states of each sensor mode loT device, combining the individual output matrices into a single hidden layer output matrix
f) Calculating through each actuator mode loT device of the scalar product of the hidden layer output matrix and its own output layer weight matrix resulting in a scalar value
g) Storing of the scalar value and setting a READY flag locally
h) Requesting the output values of all acutator mode loT devices by the gateway mode loT device after checking the READY states of each acutator mode loT device, combining them into a singular output matrix
i) Broadcasting a SET message to all actuator mode loT devices after checking for anomalies in the output values by the gateway mode loT device
j) Setting a signal output to its locally stored scalar output value of each acutator mode loT device upon receiving the SET message.

16. Method for the operation of the connecting system according to claim 15, with the following steps:
k) Collecting sensor input states from all sensor mode loT devices by the gateway mode loT device, and actuator output states from all acuator mode loT devices
I) Storing these values locally as a matrix with input states mapped to output states, referred to here as the state space
m) Composing of the weight matrix of the hidden layer by appending each weight matrix of each sensor mode loT device to a designated hidden layer weight matrix maintained by the gateway mode loT device
n) Composing of the weight matrix of the output layer by appending each weight matrix of each actuator mode loT device to a designated output layer weight matrix maintained by the gatewax mode loT device
o) Initialization to random values before training of the weight matrices in the ANN is initiated
p) Carrying out an adjustment of all or some weights in the ANN after a predetermined time interval by the gateway mode loT device according to either a back-propagation algorithm or an extreme learning machine ELM algorithm
q) Using the previously stored matrices of inputs mapped to their corresponding outputs
r) Optimizing the ANN by adjusting hyperparameters as the number of hidden layer neurons
s) Considered fully trained ANN after the ANN training error has descreased to a minimum level.
